# EUROPÄISCHE PATENTSCHRIFT

(11) **EP 2 418 128 B1**
(45) Veröffentlichungstag und Bekanntmachung des Hinweises auf die Patenterteilung: **18.07.2012**
(21) Anmeldenummer: 10008367.4
(22) Anmeldetag: 11.08.2010
(51) Int. Cl.: B60R 19/56

(54) **Heck-Unterfahrschutz**
Rear underride protection
Protection anti-encastrement arrière

(43) Veröffentlichungstag der Anmeldung: 15.02.2012
(73) Patentinhaber: Infatec GmbH, 48167 Münster-Wolbeck (DE)
(72) Erfinder: Schimmelpfennig, Karl-Heinz, 48167 Münster-Wolbek (DE)
(74) Vertreter: Tarvenkorn, Oliver

(56) Entgegenhaltungen:
- DE-A1-102006 056 498
- DE-A1-102007 045 823

## Beschreibung

Die Erfindung betrifft einen Heck-Unterfahrschutz für einen LKW, wobei hierunter solche Nutzfahrzeuge umfasst werden sollen, die über eine meist über 1 Meter hohe und durchgehende Ladefläche oder sonstigen Nutzraum verfügen, unter der ein tragender oder mittragender Rahmen und daran Achsen und Räder angeordnet sind, wobei auch Auflieger und Anhänger mit gemeint sind. Kleintransporter, Reisebusse und so genannte SUV sind nicht Gegenstand des betreffenden Heck-Unterfahrschutzes.

Solche LKW weisen an ihrem Heck meist einen erheblichen Überhang auf, zwischen den Hinterreifen und dem Heckabschluss liegen oft mehr als 2 Meter Abstand. Der sich hierbei ergebende Freiraum wird gelegentlich durch Staufächer oder zum Mitführen von Reservereifen benutzt, wobei aber der Nutzraum begrenzt ist, weil im hinteren Bereich bei Unebenheiten der Straße wie Bodenwellen oder kurzen Anstiegen oder beim Auffahren auf Fähren ein hohes Maß an Bodenfreiheit erforderlich ist, um ein Aufsetzen des Hecks sicher zu vermeiden. Üblicherweise sollten sich unterhalb einer in einem Winkel von 8 Grad vom Boden ab dem letzten Hinterreifen zum Heck hin ansteigenden Ebene keine Anbauten im Heckbereich befinden.

Dieses Erfordernis ausreichender Bodenfreiheit führt auch dazu, dass derartige LKW üblicherweise nicht über Stoßstangen in Höhe der Stoßstangen von PKW verfügen, was im Falle von Fahrzeugkollisionen zwischen LKW und hinten auffahrenden PKW oder im Stau von hinten hineingeschobenen PKW zu erheblichen Sicherheitsproblemen führt, desgleichen auch, wenn die Kollision im hinteren Bereich teilweise seitlich erfolgt. Üblich ist bei LKW ein Unterfahrschutz in Höhe von 0,55 m, der jedoch nicht zur Aufnahme größerer kinetischer Kräfte ausgelegt ist.

Da der gesetzlich vorgeschriebene Unterfahrschutz sowie der Heckleuchtenhalter dem kollidierenden Fahrzeug in der Regel keinen nennenswerten Widerstand bieten, kann das Sicherheitskonzept der PKW mit einer vorderen Knautschzone und einer Sicherheitszelle für die Insassen nicht greifen. Das kollidierende Fahrzeug unterfährt mit seiner tragenden Karosserie das Heckteil, bis die Karosserie auf tief liegende Teile wie Reifen oder Achse auftrifft, wo sie sich verformt und Energie aufnimmt. Zu diesem Zeitpunkt haben das Heck des LKW und der darunter liegende Rahmenträger aber bereits die Frontscheibe des PKW durchschlagen und den Insassen schwerste Verletzungen zugeführt.

Nach dem herkömmlichen Stand der Technik ist aus der DE 10 2006 056 498 A1 ein Heck-Unterfahrschutz für einen LKW bekannt, dessen Ladefläche und dessen Fahrzeugrahmen oberhalb der Stoßfänger eines üblichen PKW angeordnet sind, enthaltend ein Stoßfängerelement (Absatz 0026), ein Kippelement (7) und ein Flächenelement (6), wobei
● das Stoßfängerelement unterhalb des Heckabschlusses des LKW quer zur Fahrtrichtung und in einer Höhe angeordnet ist, die einerseits unterhalb der Höhe einer Motorhaube eines üblichen PKW, andererseits oberhalb der Höhe eines üblichen PKW-Stoßfängers liegt,
● das Kippelement (7) unten mit dem Stoßfängerelement verbunden ist,
● das Kippelement (7) am oberen Ende an einer ersten Drehachse am Fahrzeugrahmen (3) so fixiert wird, dass das untere Ende bei der Drehung um die erste Drehachse in Fahrtrichtung schräg nach unten schwenken kann,
● das Flächenelement eine Fläche über wenigstens einen Teil der Fahrzeugbreite unterhalb der Ladefläche bis zum letzten Radsatz (4) bildet, ohne diesen jedoch zu berühren,
● das Flächenelement einen heckseitigen Abschluss bildet,
● und das Flächenelement, nachdem es in eine horizontale Lage gebracht worden ist, eine in Fahrtrichtung gerichtete Bewegung ausführt, die es in horizontaler Richtung gegen den Radsatz (4) verschiebt.

Weiterhin ist in der DE 10 2007 045 823 A1, einer Zusatzanmeldung der oben zitierten DE 10 2006 056 498 A1, ein Prallelement beschrieben, wobei dieses Prallelement beim Aufprall eines Fahrzeugs eine Absenkbewegung ausführt und die Absenkbewegung mittels einer Gelenkvorrichtung auslösbar ist, die einen Winkel ausbildet, wobei sich der Winkel an der Unterseite des Nutzfahrzeugs nach hinten erstreckt, und wobei unterhalb der Knick- oder Gelenkstelle dieses Winkels das Prallelement gehalten ist, derart, dass ein auffahrendes Fahrzeug einen Druck auf die als Gelenk dienende Knick- oder Gelenkstelle ausübt, hierdurch der Winkel gespreizt und das unterhalb der Knick- oder Gelenkstelle gehaltene Prallelement abgesenkt wird.

Die Aufgabe der Erfindung ist es daher, eine sichere und verbesserte Vorrichtung zu schaffen, die ein Unterfahren eines stehenden oder fahrenden LKW durch einen PKW sicher verhindert, im Normalbetrieb dabei die erforderliche Bodenfreiheit des LKW erhält und in Anschaffung und Unterhalt möglichst wirtschaftlich ist.

Die Erfindung löst die Aufgabe durch einen Heck-Unterfahrschutz für einen LKW, dessen Ladefläche und dessen Fahrzeugrahmen oberhalb der Stoßfänger eines üblichen PKW angeordnet sind, enthaltend ein Stoßfängerelement, ein Kippelement, ein Hebelelement und ein Flächenelement, wobei
● das Stoßfängerelement unterhalb des Heckabschlusses des LKW quer zur Fahrtrichtung und in einer Höhe angeordnet ist, die einerseits unterhalb der Höhe einer Motorhaube eines üblichen PKW, andererseits oberhalb der Höhe eines üblichen PKW-Stoßfängers liegt,
● das Kippelement unten mit dem Stoßfängerelement verbunden ist,
● das Kippelement am oberen Ende an einer ersten Drehachse am Fahrzeugrahmen so fixiert wird, dass das untere Ende bei der Drehung um die erste Drehachse in Fahrtrichtung schräg nach unten schwenken kann,
● das Hebelelement an seinem oberen Ende drehbar um eine zweite Drehachse mit dem Kippelement auf der dem Heck abgewandten Seite angeordnet und mit ihm verbunden ist,
● das Hebelelement an seinem unteren Ende mit dem Flächenelement beweglich verbunden ist,
● das Flächenelement eine zum Heck hin ansteigende Fläche über wenigstens einen Teil der Fahrzeugbreite unterhalb der Ladefläche vom Hebelelement bis zum letzten Radsatz bildet, ohne diesen jedoch zu berühren,
● das Flächenelement einen heckseitigen Abschluss bildet,
● das Hebelelement so ausgerichtet ist, das es das Flächenelement in eine horizontale Position herabschiebt, wenn eine in Fahrtrichtung gerichtete Bewegung des Stoßdämpferelements und eine dadurch hervorgerufene tangentiale Bewegung auf dem Drehkreis des Kippelements erfolgt,
● und das Flächenelement, nachdem es in eine horizontale Lage gebracht worden ist, eine in Fahrtrichtung gerichtete Bewegung ausführt, die es in horizontaler Richtung gegen den Radsatz verschiebt.

Im Normalbetrieb des LKW werden die Drehachsen arretiert und halten die Konstruktion des Heck-Unterfahrschutzes fest. Im Falle einer Kollision bewirken Sollbruchstellen bzw. Soll-Biegestellen, dass die einzelnen Elemente sich an den Drehachsen wie Gelenke bewegen können. Die gesamte Konstruktion wird ferner durch weitere Haltevorrichtungen zusammengehalten, die jedoch nicht funktionell zum Unterfahrschutz beitragen, sondern Formstabilität im Normalbetrieb gewährleisten und Ersatzreifen oder die Heckbeleuchtung halten.

In einer Ausgestaltung der Erfindung wird vorgesehen, dass das Flächenelement aus 2 Teilelementen zusammengesetzt ist, von denen das eine mit dem Hebelelement verbunden ist und zum Heck hin ansteigt und das andere horizontal an das erste angesetzt ist und in Richtung des Radsatzes weist.

In einer weiteren Ausgestaltung der Erfindung wird vorgesehen, dass die Abstützung des Flächenelementes im Fall einer in Fahrtrichtung erfolgten Verschiebung durch die hinteren Reifen des LKW erfolgt.

Während der Fahrt des LKW führt die Reifenoberfläche an der vorgesehenen Stelle der Abstützung des Flächenelementes eine nach oben gerichtete Bewegung aus. Dies führt im Falle des Abstützens dazu, dass eine große, nach oben gerichtete Kraft auf das Flächenelement und die Vorrichtungen, die es in horizontaler Lage halten sollen, einwirkt. Im Falle größerer Verformungen wäre eine Kraftaufnahme durch den sich drehenden Reifen nicht möglich.

In einer weiteren Ausgestaltung der Erfindung wird daher vorgesehen, dass die Tragwerkaufhängung nach unten unterhalb der Ebene des Flächenelements verlängert ausgeführt wird, wobei die Tragwerkaufhängung in gerader Weise so geformt ist, dass sie Stauchungskräfte aufnehmen kann und als Teil der Tragstruktur für das Flächenelement dient,

In einer weiteren Ausgestaltung der Erfindung wird daher vorgesehen, dass der Kotflügel des Reifens nach unten unterhalb der Ebene des Flächenelements verlängert ausgeführt wird, wobei der Kotflügel so geformt ist, dass er den gleichen Radius wie der Reifen aufweist, Stauchungskräfte aufnehmen kann, und als Tragstruktur für das Flächenelement dient,

In einer weiteren Ausgestaltung der Erfindung werden Tragwerkaufhängung oder Kotflügel oder beide am unteren Ende mit einem Hakenelement versehen, welches nach oben zum Flächenelement hin gerichtet und mit ihm verbunden ist. Hierdurch wird verhindert, dass es bei der Drehung des Reifens zu einem Verkeilen des Kotflügels mit dem Unterfahrschutzsystem kommt.

In einer weiteren Ausgestaltung der Erfindung sind Tragwerkaufhängung, Kotflügel und Hakenelemente zu einer Einheit verbunden und bilden gemeinsam die Tragstruktur für das Flächenelement.

In einer alternativen Ausgestaltung der Erfindung wird vorgesehen, dass die Abstützung des Flächenelementes im Fall einer in Fahrtrichtung erfolgten Verschiebung durch die hintere Achse des LKW erfolgt.

In einer weiteren Ausgestaltung der Erfindung werden zwischen dem Flächenelement und der Ladefläche des LKW Staufächer vorgesehen.

Eine weitere Ausgestaltung betrifft das Hebelelement. Wenn eine in Fahrtrichtung gerichtete Bewegung des Stoßdämpferelements und eine dadurch hervorgerufene tangentiale Bewegung auf dem Drehkreis des Kippelements erfolgt, ist das Hebelelement so ausgerichtet, dass es das Flächenelement in eine horizontale Position herabschiebt. Hier ist vorgesehen, dass das Stoßdämpferelement auf seiner dem Hebelelement zugewandten Seite einen Keil aufweist, der in eine entsprechende Aufnahmevorrichtung des Hebelelements eingeführt wird, sich damit verhakt, und das Hebelelement genau so positioniert, dass das Flächelement in gerader Richtung zum Krafteinleitpunkt am Hinterreifen oder an der Hinterachse geführt wird.

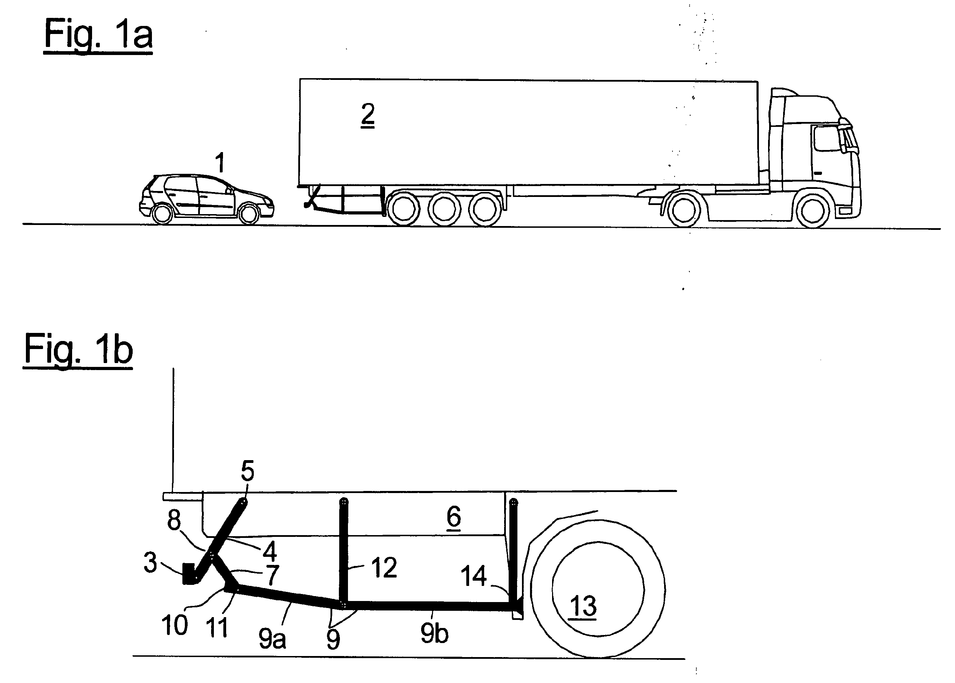

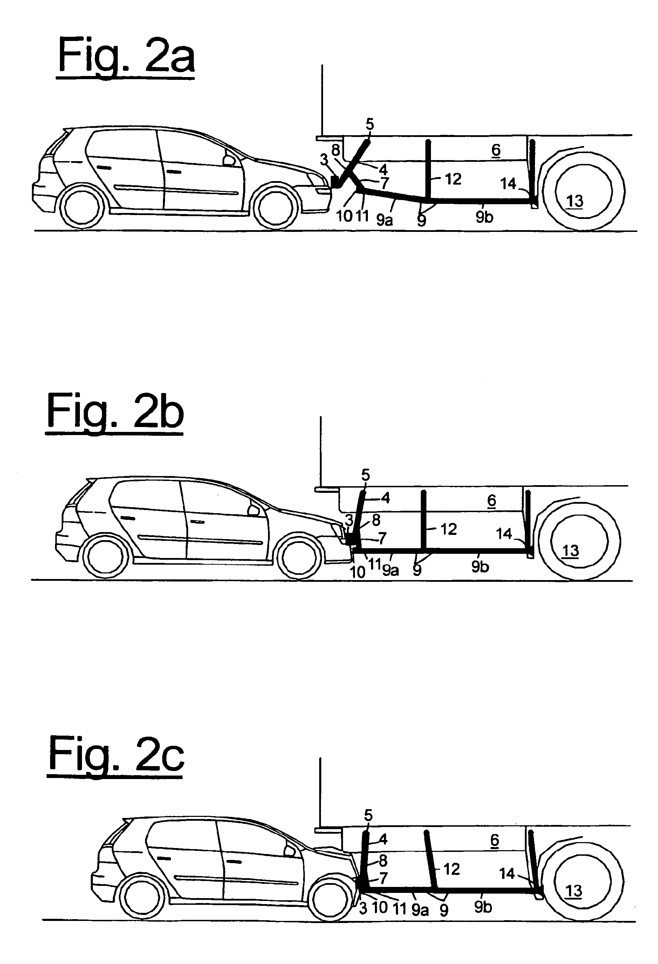

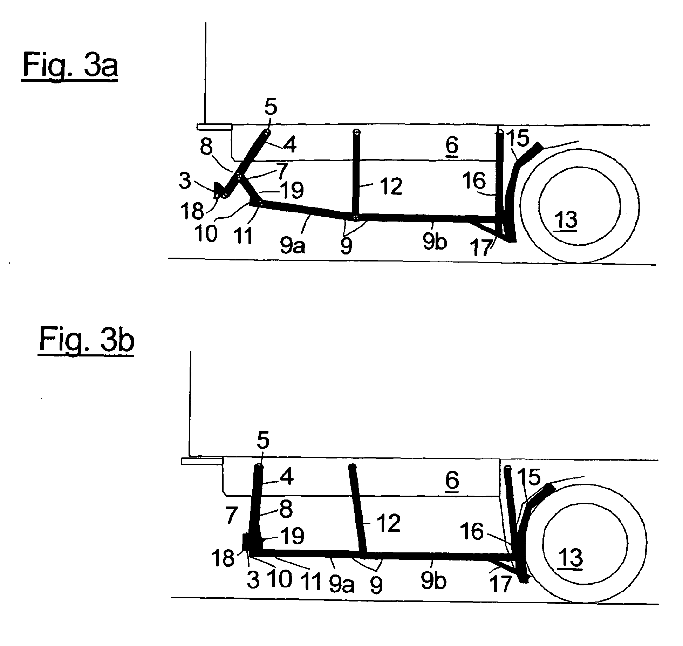

Die Erfindung wird im folgenden Beispiel anhand mehrerer Skizzen näher erläutert:
● Fig. 1 a zeigt einen PKW (1), der im Betriff ist, auf einen LKW (2), der über einen erfindungsgemäßen Heck-Unterfahrschutz verfügt, aufzufahren,
● Fig. 1b zeigt schematisch eine Ausschnittvergrößerung des Heck-Unterfahrschutzes aus Fig. 1 a,
● Fig. 2a zeigt den Heck-Unterfahrschutz im Moment des Aufpralls eines durchschnittlichen PKW bei einer hohen Geschwindigkeit, z.B. von 65 km/h,
● Fig. 2b zeigt die Stellung der Elemente nach dem Herabklappen des Flächenelementes bei einer Kollision,
● Fig. 2c zeigt die Endstellung der abgestützten Elemente nach einer solchen Kollision,
● Fig. 3a zeigt eine Ausschnittvergrößerung entsprechend Fig. 1b mit vorteilhaften Ausgestaltungen vor einem Aufprall,
● Fig. 3b zeigt die in Fig. 3a dargestellten Ausgestaltungen nach der Einwirkung eines Aufpralls.

Fig. 1a und 1b zeigen das Stoßfängerelement 3, welches mit dem Kippelement 4 fest verbunden ist. Die Verbindung erfolgt am besten mittels eines Bleches, welches sich ebenso wie das Stoßfängerelement 3 über die gesamte Fahrzeugbreite erstreckt. Das Kippelement 4 kann vorteilhaft in Form einzelner Träger, vorzugsweise 2 bis 4 Stück, ausgeführt werden. Das Kippelement 4 wird am oberen Ende am Gelenk 5 am Fahrzeugrahmen 6 des LKW 2 fixiert. Das Gelenk 5 bildet dabei die erste Drehachse.

Am Kippelement 4, vorzugsweise in der Nähe des Stoßfängerelements 3, ist das Hebelelement 7 am Gelenk 8 angebracht. Im Falle einer Kollision bewirkt dieses Hebelelement 7 zusammen mit dem Kippelement 4 eine Kraftumlenkung der horizontalen Kräfte in eine vertikal gerichtete Kraft, die auf das Flächenelement 9 wirkt, welches in diesem Beispiel geteilt ausgeführt ist und aus einem geneigten Teil 9a und einem horizontalen Teil 9b zusammengesetzt ist, und die das geneigte Teil 9a in eine horizontale Position herunter drückt.

In dieser horizontalen Position kommt der Heckabschluss 10, der konstruktiv als eine Verstrebung über die gesamte Fahrzeugbreite ausgeführt sein kann, in eine Höhe, in denen das Sicherheitssystem von üblichen PKW greift, üblicherweise 0,35 m. Die Krafteinleitung über die Befestigung 11 kann dabei derart erfolgen, dass eine starre Einrastposition erreicht wird, sobald das Flächenelement 9 horizontal liegt.

Sobald diese horizontale Endposition erreicht ist, bewirken die Kollisionskräfte, die über den Heckabschluss eingeleitet werden, dass das Flächenelement in Fahrtrichtung verschoben wird, und dabei in horizontaler Ausrichtung verbleibt und sich auch nicht wesentlich verformt, insbesondere nicht knickt. Das Flächenelement 9 ist dabei derart ausgeprägt, dass bereits nach wenigen Zentimetern die Abstützpunkte am letzten Fahrzeugrad 13 erreicht werden. Dies können alternativ Teile des Reifens oder der Achse sein oder auch beides. Damit das Flächenelement auch in horizontaler Ausrichtung auf das letzte Fahrzeugrad 13 auftrifft, wird eine Abstützung 14 vorgesehen, die konstruktiv mit den Radverkleidungen verbunden werden kann.

Das Flächenelement 9 ist dabei konstruktiv so auszulegen, dass es bei den üblicherweise auftretenden Kräften nicht knicken kann, beispielsweise kann es aus einer handelsüblichen Sperrholzplatte bestehen. Sofern im Normalbetrieb auf dem Flächenelement Staufächer angebracht werden, ist auch mindestens eine Halterung 12 erforderlich.

Fig. 2a, 2b und 2c sollen den Kollisionsvorgang erläutern und stellen den zeitlichen Ablauf dar. Fig. 2 a zeigt, wo das kollidierende Fahrzeug auftrifft. Das kollidierende Fahrzeug stößt zunächst an das Stoßfängerelement 3, welches der Kollision wenig Widerstand entgegensetzt, und, geführt vom Kippelement 4, abwärts in seine vertikale Endposition schwenkt. Hierbei wird über das Hebelelement 7 auch das Flächenelement 9 abwärts gesenkt.

Fig. 2b zeigt, wo in vertikaler Endposition das Hebelelement 7 arretiert und das kollidierende Fahrzeug mit seinem Rahmen auf den Heckabschluss 10 des Flächenelementes 9 trifft. Heckabschluss 10, Stoßfängerelement 3 und Hebelelement 7 können hierbei auch derart dimensioniert werden, dass sie in der Endposition eine starre Einheit bilden und unterschiedliche Höhen der Frontpartie des kollidierenden Fahrzeugs ausgleichen.

Fig. 2c zeigt im Anschluss daran, wie der Heckabschluss 10 eine horizontale Verschiebung des Flächenelements 9 bewirkt, bis es auf das hinterste Fahrzeugrad 13 trifft, in diesem Beispiel den Fahrzeugreifen. Der Weg in horizontaler Richtung kann hierbei konstruktiv so gestaltet werden, dass bereits ein Teil der kinetischen Energie des kollidierenden Fahrzeugs aufgenommen und umgewandelt wird. Hierbei ist jedoch darauf zu achten, dass eine starre und verformungsarme Konstruktion gewählt wird. Sobald auch die horizontale Endposition, wie in Fig. 2b gezeigt, erreicht ist, findet weiterer Abbau der kinetischen Energie nur noch am kollidierenden Fahrzeug statt.

Fig. 3a zeigt die Ausgestaltung einer erfindungsgemäßen Tragwerkaufhängung und eines erfindungsgemäßen Kotflügels vor einem Auffahrunfall. Die Tragwerkaufhängung 16 ist hierbei verlängert ausgeführt. Hierbei wird die Abstützung (14, z.B. in Fig. 1b) ersetzt durch den Kotflügel 15, der den gleichen Radius wie der Reifen 13 aufweist, Der Kotflügel ist verstärkt und nach unten hin verlängert ausgeführt, um die großen Reibungskräfte aufnehmen zu können, die beim Aufdrücken des Kotflügels 15 durch stauchende Krafteinwirkung des Flächenelements 9b auf den Kotflügel in tangentialer Richtung des drehenden Reifens wirken. Der Kotflügel 15 wird hierbei ebenso wie das Flächenelement 9b von der Tragwerkaufhängung 16 am Fahrzeugrahmen 6 gehalten.

Weiterhin zeigt Fig. 3a das Kotflügel-Hakenelement 17, mit dem der Kotflügel 15 an seinem unteren Ende versehen ist, welches nach oben zum Flächenelement 9b hin gerichtet und mit ihm verbunden ist, Hierdurch wird verhindert, dass es bei der Drehung des Reifens 13 zu einem Verkeilen der Tragwerkaufhängung 16 oder des Kotflügels 15 mit dem Unterfahrschutzsystem kommt. Kotflügel 15, Tragwerkaufhängung 16 und Kotflügel-Hakenelement 17 bilden gemeinsam die Tragstruktur für das Flächenelement 9b.

Weiterhin zeigt Fig. 3a die weitere Ausgestaltung betreffend das Hebelelement 7. Das Stoßdämpferelement 3 weist auf seiner dem Hebelelement 7 zugewandten Seite einen Stoßdämpferkeil 18 auf, der in eine entsprechende Aufnahmevorrichtung des Hebelelements 7, dem Aufnahmeelement 19 eingeführt wird, sich damit verhakt, und das Hebelelement 7 genau so positioniert, dass das Flächenelement 9a bzw. 9b in gerader Richtung zum Krafteinleitpunkt am Hinterreifen 13 oder an der Hinterachse des LKW geführt wird.

Fig. 3b zeigt die Wirkung der erfindungsgemäßen Tragstruktur für das Flächenelement 9b und der Aufnahmevorrichtung des Hebelelements 7 nach einem Auffahrunfall,

Wird eine horizontale Kraft in das Unterfahrschutzsystem eingeleitet, findet eine definierte Verformung des Systems zur weiteren Kraftaufnahme statt. Der Kotflügel schmiegt sich an den Reifen des Aufliegers und ermöglicht eine weitere Kraftaufnahme des Gesamtsystems. Da der Kotflügel verlängert ausgeführt wurde, kommt es bei der Drehung des Reifens nicht zu einem Verkeilen zwischen Reifen und dem Unterfahrschutzsystem. Die gleiche Wirkung wird auch von der Tragwerkaufhängung bewirkt.

Im Profil des Hebelelements 7 befindet sich eine Öffnung. Der Stoßdämpfer besitzt eine abstehende winklige Spitze. Nach der Kraftaufbringung, verschiebt sich der Stoßdämpfer 3 und befindet sich in der Aufnahmeöffnung des Hebelelements 7, wo es sich verhakt hat Diese Verhakung sorgt dafür, dass sich das Hecksystem in die optimale Position zur weiteren Kraftaufnahme verschoben hat und in dieser Position geblieben ist.

**Bezugszeichenliste**
- 1: PKW
- 2: LKW
- 3: Stoßfängerelement
- 4: Kippelement
- 5: Gelenk
- 6: Fahrzeugrahmen
- 7: Hebelelement
- 8: Gelenk
- 9, 9a, 9b: Flächenelement
- 10: Heckabschluss
- 11: Befestigung
- 12: Halterung
- 13: Fahrzeugrad
- 14: Abstützung
- 15: Kotflügel
- 16: Tragwerkaufhängung
- 17: Kotflügel-Hakenelement
- 18: Stoßdämpferkeil
- 19: Aufnahmeelement

## Patentansprüche

1. Heck-Unterfahrschutz für einen LKW (2), dessen Ladefläche und dessen Fahrzeugrahmen oberhalb der Stoßfänger eines üblichen PKW (1) angeordnet sind, enthaltend ein Stoßfängerelement (3), ein Kippelement (4) und ein Flächenelement (9), wobei
• das Stoßfängerelement (3) unterhalb des Heckabschlusses des LKW quer zur Fahrtrichtung und in einer Höhe angeordnet ist, die einerseits unterhalb der Höhe einer Motorhaube eines üblichen PKW, andererseits oberhalb der Höhe eines üblichen PKW-Stoßfängers liegt,
• das Kippelement (4) unten mit dem Stoßfängerelement (3) verbunden ist,
• das Kippelement (4) am oberen Ende an einer ersten Drehachse (5) am Fahrzeugrahmen (6) so fixiert wird, dass das untere Ende bei der Drehung um die erste Drehachse (5) in Fahrtrichtung schräg nach unten schwenken kann,
• das Flächenelement (9) eine Fläche über wenigstens einen Teil der Fahrzeugbreite unterhalb der Ladefläche bis zum letzten Radsatz (13) bildet, ohne diesen jedoch zu berühren,
• das Flächenelement (9) einen heckseitigen Abschluss (10) bildet,
• und das Flächenelement (9), nachdem es in eine horizontale Lage gebracht worden ist, eine in Fahrtrichtung gerichtete Bewegung ausführt, die es in horizontaler Richtung gegen den Radsatz (13) verschiebt.
**gekennzeichnet dadurch, dass**
• der Heck-Unterfahrschutz ferner ein Hebelelement (7) enthält,
• das Hebelelement (7) an seinem oberen Ende drehbar um eine zweite Drehachse (8) mit dem Kippelement (4) auf der dem Heck abgewandten Seite angeordnet und mit ihm verbunden ist,
• das Hebelelement (7) an seinem unteren Ende (11) mit dem Flächenelement (9) beweglich verbunden ist,
• das Flächenelement (9) eine zum Heck hin ansteigende Fläche über wenigstens einen Teil der Fahrzeugbreite unterhalb der Ladefläche vom Hebelelement (7) bis zum letzten Radsatz (13) bildet, ohne diesen jedoch zu berühren,
• das Hebelelement (7) so ausgerichtet ist, dass es das Flächenelement (9) in eine horizontale Position herabschiebt, wenn eine in Fahrtrichtung gerichtete Bewegung des Stoßdämpferelements (3) und eine dadurch hervorgerufene tangentiale Bewegung auf dem Drehkreis des Kippelements (4) erfolgt.

2. Vorrichtung nach Anspruch 1, **dadurch gekennzeichnet, dass** das Flächenelement (9) aus 2 Teilelementen (9a, 9b) zusammengesetzt ist, von denen das eine mit dem Hebelelement (7) verbunden ist und zum Heck hin ansteigt und das andere horizontal an das erste angesetzt ist und in Richtung des Radsatzes (13) weist.

3. Vorrichtung nach einem der Ansprüche 1 oder 2, **dadurch gekennzeichnet, dass** die Abstützung des Flächenelementes (9) im Fall einer in Fahrtrichtung erfolgten Verschiebung durch die hinteren Reifen des LKW erfolgt.

4. Vorrichtung nach einem der Ansprüche 1 bis 3, **dadurch gekennzeichnet, dass** die Tragwerkaufhängung (16) nach unten unterhalb der Ebene des Flächenelements (9b) verlängert ausgeführt wird, wobei die Tragwerkaufhängung (16) in gerader Weise so geformt ist, dass sie Stauchungskräfte aufnehmen kann und als Teil der Tragstruktur für das Flächenelement (9b) dient.

5. Vorrichtung nach einem der Ansprüche 1 bis 4 **dadurch gekennzeichnet, dass** der Kotflügel (15) des Reifens (13) nach unten unterhalb der Ebene des Flächenelements (9b) verlängert ausgeführt wird, wobei der Kotflügel (15) so geformt ist, dass er den gleichen Radius wie der Reifen (13) aufweist, Stauchungskräfte aufnehmen kann, und als Teil der Tragstruktur für das Flächenelement (9b) dient.

6. Vorrichtung nach einem der Ansprüche 1 bis 5 **dadurch gekennzeichnet, dass** der Tragwerkaufhängung (16) oder Kotflügel (15) oder beide am unteren Ende mit mindestens einem Hakenelement (17) versehen werden, welches nach oben zum Flächenelement (9b) hin gerichtet und mit ihm verbunden ist.

7. Vorrichtung nach einem der Ansprüche 1 bis 6, **dadurch gekennzeichnet, dass** Tragwerkaufhängung (16), Kotflügel (15) und Hakenelemente (17) zu einer Einheit verbunden sind gemeinsam die Tragstruktur für das Flächenelement (9b) bilden.

8. Vorrichtung nach einem der Ansprüche 1 oder 2, **dadurch gekennzeichnet, dass** die Abstützung des Flächenelementes (9) im Fall einer in Fahrtrichtung erfolgten Verschiebung durch die hintere Achse des LKW erfolgt.

9. Vorrichtung nach einem der Ansprüche 1 bis 8, **dadurch gekennzeichnet, dass** zwischen dem Flächenelement (9) und der Ladefläche des LKW Reservereifen vorgesehen werden.

10. Vorrichtung nach einem der Ansprüche 1 bis 8, **dadurch gekennzeichnet, dass** zwischen dem Flächenelement (9) und der Ladefläche des LKW Staufächer vorgesehen werden.

11. Vorrichtung nach einem der Ansprüche 1 bis 10, **dadurch gekennzeichnet, dass** das Stoßdämpferelement auf seiner dem Hebelelement zugewandten Seite einen Keil aufweist, der in eine entsprechende Aufnahmevorrichtung des Hebelelements eingeführt wird, sich damit verhakt, und das Hebelelement genau so positioniert, dass das Flächenelement in gerader Richtung zum Krafteinleitpunkt am Hinterreifen oder an der Hinterachse geführt wird.

## Claims

1. A rear under-ride guard for an HGV (2), of which the loading area and the vehicle frame are situated above the bumpers of a conventional passenger car (1), comprising a bumper element (3), a tilting element (4) and a panel element (9), wherein
- the bumper element (3) is situated below the rear termination of the HGV transversely to the direction of travel and at a height which is situated below the height of a bonnet of a conventional passenger car on the one hand but above the height of a conventional passenger car bumper on the other hand,
- the tilting element (4) is connected at the bottom to the bumper element (3),
- the tilting element (4) is fixed to the vehicle frame (6) at the upper end on a first axis of rotation (5) in such a way that during the turning about the first axis of rotation (5) the lower end can pivot obliquely downwards in the direction of travel,
- the panel element (9) forms an area over at least part of the width of the vehicle below the loading area as far as the last set of wheels (13) but without touching the latter,
- the panel element (9) forms a termination (10) at the rear,
- and after the panel element (9) has been moved into a horizontal position it carries out a movement which is directed in the direction of travel and which presses it towards the set of wheels (13) in the horizontal direction,
**characterized in that**
- the rear under-ride guard additionally contains a lever element (7),
- the lever element (7) is arranged so as to be rotatable at its upper end about a second axis of rotation (8) with the tilting element (8) on the side facing away from the rear and is connected to it,
- the lever element (7) is connected in a movable manner at its lower end (11) to the panel element (9),
- the panel element (9) forms an area rising towards the rear over at least part of the width of the vehicle below the loading area from the lever element (7) as far as the last set of wheels (13) but without touching the latter,
- the lever element (7) is orientated in such a way that it presses the panel element (9) down into a horizontal position when a movement of the bumper element (3) directed in the direction of travel and a tangential movement caused as a result take place on the turning circle of the tilting element (4).

2. An apparatus according to claim 1, **characterized in that** the panel element (9) is formed from two element parts (9a, 9b), one of which is connected to the lever element (7) and rises towards the rear and the other of which is set horizontally against the first one and faces in the direction of the set of wheels (13).

3. An apparatus according to one of claims 1 or 2, **characterized in that** the panel element (9) is supported by the rear tyres of the HGV in the event of displacement occurring in the direction of travel.

4. An apparatus according to any one of claims 1 to 3, **characterized in that** the support structure suspension (16) is extended downwards below the plane of the panel element (9b), wherein the support structure suspension (16) is shaped in a straight manner in such a way that it can absorb compression forces and acts as part of the support structure for the panel element (9b).

5. An apparatus according to any one of claims 1 to 4, **characterized in that** the mudguard (15) of the tyre (13) is extended downwards below the plane of the panel element (9b), wherein the mudguard (15) is shaped in such a way that it has the same radius as the tyre (13), can absorb compression forces and acts as part of the support structure for the panel element (9b).

6. An apparatus according to any one of claims 1 to 5, **characterized in that** the support structure suspension (16) or the mudguard (15) or both is or are provided at the lower end with at least one hook element (17) which is directed upwards towards the panel element (9b) and is connected to it.

7. An apparatus according to any one of claims 1 to 6, **characterized in that** the support structure suspension (16), the mudguard (15) and the hook elements (17) are joined to form a unit [and] jointly form the support structure for the panel element (9b).

8. An apparatus according to one of claims 1 or 2, **characterized in that** the panel element (9) is supported by the rear axle of the HGV in the event of a displacement occurring in the direction of travel.

9. An apparatus according to any one of claims 1 to 8, **characterized in that** spare tyres are provided between the panel element (9) and the loading area of the HGV.

10. An apparatus according to any one of claims 1 to 8, **characterized in that** storage compartments are provided between the panel element (9) and the loading area of the HGV.

11. An apparatus according to any one of claims 1 to 10, **characterized in that** on its side facing the lever element the bumper element has a wedge which is inserted into a corresponding receiving apparatus of the lever element, is caught by the latter and precisely positions the lever element in such a way that the panel element is guided in a straight direction to the force transmission point on the rear tyre or on the rear axle.

## Revendications

1. Protection anti-encastrement arrière pour un camion (2), dont la surface de chargement et le châssis de véhicule sont disposés au-dessus des pare-chocs d'une voiture particulière usuelle (1), contenant un élément de pare-chocs (3), un élément basculant (4) et un élément de surface (9), sachant que
- l'élément de pare-chocs (3) est disposé au-dessous de l'arête arrière du camion transversalement au sens de la marche et à une hauteur qui se trouve d'une part au-dessous de la hauteur d'un capot d'une voiture particulière usuelle, d'autre part au-dessus de la hauteur d'un pare-chocs de voiture particulière usuel,
- l'élément basculant (4) est relié en bas à l'élément de pare-chocs (3),
- l'élément basculant (4) est fixé au niveau de l'extrémité supérieure sur un premier axe de rotation (5) sur le châssis de véhicule (6) de sorte que l'extrémité inférieure puisse pivoter en biais vers le bas dans le sens de la marche lors de la rotation autour du premier axe de rotation (5),
- l'élément de surface (9) forme une surface sur au moins une partie de la largeur du véhicule au-dessous de la surface de chargement jusqu'à la dernière paire de roues (13) sans toutefois la toucher,
- l'élément de surface (9) forme une arête (10) côté arrière,
- et l'élément de surface (9) après qu'il a été amené dans une position horizontale, réalise un mouvement dirigé dans le sens de la marche qui le déplace dans le sens horizontal contre la paire de roues (13), **caractérisée en ce que**
- la protection anti-encastrement arrière contient de plus un élément de levier (7),
- l'élément de levier (7) est disposé sur son extrémité supérieure de manière à pouvoir tourner autour d'un second axe de rotation (8) avec l'élément basculant (4) sur le côté éloigné de l'arrière et est relié à celui-ci,
- l'élément de levier (7) est relié de manière mobile sur son extrémité inférieure (11) à l'élément de surface (9),
- l'élément de surface (9) forme une surface montante vers l'arrière sur au moins une partie de la largeur de véhicule au-dessous de la surface de chargement de l'élément de levier (7) jusqu'à la dernière paire de roues (13) sans toutefois la toucher,
- l'élément de levier (7) est orienté de sorte qu'il coulisse vers le bas l'élément de surface (9) dans une position horizontale si un mouvement dirigé dans le sens de la marche de l'élément de pare-chocs (3) et un mouvement tangentiel suscité par là même sont réalisés sur le cercle de révolution de l'élément basculant (4).

2. Dispositif selon la revendication 1, **caractérisé en ce que** l'élément de surface (9) est composé de deux éléments partiels (9a, 9b), dont un est relié à l'élément de levier (7) et monte vers l'arrière et l'autre est placé horizontalement contre le premier et est dirigé en direction de la paire de roues (13).

3. Dispositif selon l'une quelconque des revendications 1 ou 2, **caractérisé en ce que** l'appui de l'élément de surface (9) est réalisé dans le cas d'un déplacement réalisé dans le sens de la marche par les pneus arrière du camion.

4. Dispositif selon l'une quelconque des revendications 1 à 3, **caractérisé en ce que** la suspension du châssis (16) est réalisée prolongée vers le bas au-dessous du plan de l'élément de surface (9b), sachant que la suspension du châssis (16) est formée de manière rectiligne de sorte qu'elle puisse recevoir des forces d'écrasement et sert de partie de la structure porteuse pour l'élément de surface (9b).

5. Dispositif selon l'une quelconque des revendications 1 à 4, **caractérisé en ce que** le garde-boue (15) du pneu (13) est réalisé prolongé vers le bas au-dessous du plan de l'élément de surface (9b), sachant que le garde-boue (15) est formé de sorte qu'il présente le même rayon que le pneu (13), puisse recevoir des forces d'écrasement et serve de partie de la structure porteuse pour l'élément de surface (9b).

6. Dispositif selon l'une quelconque des revendications 1 à 5, **caractérisé en ce que** la suspension du châssis (16) ou le garde-boue (15) ou les deux sont pourvus sur l'extrémité inférieure d'au moins un élément de crochet (17) qui est dirigé vers le haut vers l'élément de surface (9b) et est relié à celui-ci.

7. Dispositif selon l'une quelconque des revendications 1 à 6, **caractérisé en ce que** la suspension du châssis (16), le garde-boue (15) et les éléments de crochet (17) sont reliés en une unité et forment conjointement la structure porteuse pour l'élément de surface (9b).

8. Dispositif selon l'une quelconque des revendications 1 ou 2, **caractérisé en ce que** l'appui de l'élément de surface (9) est réalisé dans le cas d'un déplacement réalisé dans le sens de la marche par l'essieu arrière du camion.

9. Dispositif selon l'une quelconque des revendications 1 à 8, **caractérisé en ce que** des pneus de rechange sont prévus entre l'élément de surface (9) et la surface de chargement du camion.

10. Dispositif selon l'une quelconque des revendications 1 à 8, **caractérisé en ce que** des compartiments de rangement sont prévus entre l'élément de surface (9) et la surface de chargement du camion.

11. Dispositif selon l'une quelconque des revendications 1 à 10, **caractérisé en ce que** l'élément de pare-chocs présente sur son côté tourné vers l'élément de levier un coin qui est introduit dans un dispositif de réception correspondant de l'élément de levier, s'accroche avec celui-ci, et positionne l'élément de levier précisément de sorte que l'élément de surface soit guidé tout droit vers le point d'introduction des forces sur le pneu arrière ou sur l'essieu arrière.
